# EUROPEAN PATENT APPLICATION

(11) **EP 4 571 573 A1**
(43) Date of publication of application: **18.06.2025**
(21) Application number: 24167955.4
(22) Date of filing: 31.03.2024
(51) Int. Cl.: G06K 19/06

(54) **A SMART INDICATOR LABEL, A METHOD OF FABRICATION THEREOF, AND A MEMORY MEDIUM OR DEVICE WITH A CODE DATA RECORD FOR THE METHOD**

(30) Priority: 13.12.2023 EP 23216085
(71) Applicant: QR-Marketing GmbH, 20457 Hamburg (DE)
(72) Inventor: VIRO, Vladimir, 86161 Augsburg (DE)
(74) Representative: Nezlobin, Nikolai

(57) **Abstract**

The disclosure relates to an indicator label with a changeable code. The changeable code is configured to be presented in an initial state by a first code and in a changed state indicating an occurrence of a certain condition by a second code. The first code includes a first plurality of image features encoding at least a first string, the first plurality being redundant with an error correction capability for decoding the first string with respect to a possible incorrect determination of a subset of the first plurality of the image features. The second code is different from the first code and includes a second plurality of image features encoding at least a second string different from the first string, the second plurality being redundant with an error correction capability for decoding the second string with respect to a possible incorrect determination of a subset of the second plurality of the image features. The first plurality of image features includes a first plurality of features of a first value region of an at least one optical characteristic and a first plurality of features of a second value region of the at least one optical characteristic, not intersecting with the first value region. The second plurality of image features includes a second plurality of features of the first value region of the at least one optical characteristic and a second plurality of features of the second value region of the at least one optical characteristic. A subset of the first plurality of features of the first value region of the at least one optical characteristic is reactive and configured to change the values into the second value region in reaction to the occurrence of the certain condition, and thereby to turn into a respective subset of the second plurality of features of the second value region of the at least one optical characteristic, wherein the first code is thereby configured to turn into the second code upon the occurrence of the condition.

## Description

### TECHNICAL FIELD

The present disclosure generally relates to techniques used for and with smart indicator labels (also called smart label indicators).

### BACKGROUND

Smart labels allow for better tracking and monitoring of various products, and information sharing regarding these products and events associated them. The labels are used in the automatic identification and data capture (AIDC) relating to the methods of automatically identifying objects, collecting data about them, and entering them directly into computer systems, without human involvement, as discussed in Non-Patent Literature 1; as well as they are used in many cases with the human involvement. As a rule, the automatic system or a human would use a reader, for example, a smartphone, or a barcode scanner (e.g. with its own lighting system, for example, red or infrared), and in some cases a connection to a network, for example, the internet, to capture and decode information encoded in the label. A barcode label, or, for instance, a 2D barcode label, such as a Quick Response, QR, label present examples of the smart label. QR code is widely used for its storage capacity and fast readability; but there is a range of other formats. Such an optical code label (a print-coded label) may be combined with, e.g. applied over, a flat transponder, which includes chip and antenna, so that the resulting smart label could be easily found and read. The transponder may be implemented, for example, as a radio frequency identification, RFID, tag. At the same time, a smart label does not have to include the optically coded image, and, for example, the RFID tag presents a smart label by itself.

Smart labels may be designed as indicators. For example, in Non-Patent Literature 2, a continuous production process is presented for smart labels specifically designed as time-temperature indicators (TTI). Printing and converting technologies was set out on a traditional rotary press that works at high web speed with a great repeatability of the printed product. TTI labels were based on a functional water-based ink that impregnated some areas of an absorbent paper whose edges were waterproofed by a ultraviolet (UV) graphic ink. A rotary screen printing process was used for the deposition of the inks and a plastic layer was applied by lamination on both sides of the substrate to ensure optimum wetness of the functional ink. The formulation of the ink included a chromogenic growth medium with a starter culture; the metabolism of the bacteria acidified the ink, hence changing the pH indicator color. A model based on the Gompertz equation was developed to simulate the color change of the labels for different starter culture loads and temperatures, with a substantial match between predictions and experimental data. Consequently, it was proposed to use those TTI labels for improving traceability and quality of those foodstuffs and pharmaceuticals, for which maintaining an adequate temperature during postproduction stages of perishable products is essential, more frequently requiring cold chain control.

TTIs or other indicators may be based on different smart label technologies. For example, Non-Patent Literature 3 discusses a food freshness smart indicator implemented as a cost-effective smart label using CO2 indicating technology developed by Insignia Technologies Ltd. The label changes color over a specified time and temperature; the used can use printed reference colors for tracking the freshness of the product. In particular, the labels are designed to change color over a pre-set number of days at a prescribed temperature, and an increase in temperature speeds up the color change.

Then, Non-Patent Literature 4 discusses an indicator that can detect changes in the meat packaging, indicating its freshness through color change. To this end, phenol red and bromothymol blue are applied onto the indicator strip. As the meat degrades, it releases nitrogenous compounds such as amines into its surroundings caused by the consumption of sugars by the invading spoilage microbes. These compounds can be detected as Total Volatile Basic Nitrogen (TVBN) by the indicator. Alkalinity is another parameter affected by degrading meat, where increased pH indicates further meat degradation. Phenol red, which is red in color, is used to analyze the change of pH of the meat. If the indicator changes its color from red to yellow, it indicates that the meat is fresh. On the other hand if the color changes from red to reddish pink, it indicates that the meat is not fresh and is not safe for consumption. Bromothymol blue is used in indicators to quantify the TVBN inside the meat packaging. A color change from yellowish to green or greenish-blue indicates a high number of TVBN in the vicinity of the product. This would point to the degradation of the meat, not only due to the change in its biochemical composition (less sugars in the meat and more released nitrogen), but also due to the increase in spoilage microbes in the meat.

Non-Patent Literature 5 is aimed at using smart labels as indicators of tomato freshness using mangosteen peel extract. The motivation was that although several studies had added synthetic substances as smart labels, this was non optimal for fresh products that are consumed directly. For this reason, smart labels with natural ingredients taken from plant extracts are to be preferred, and it has been proposed to use the rind of the mangosteen fruit as an indicator on a smart label. The technique quantifies the color change of the indicator label by assessing chroma and hue scores, and following the ripening and further process on a map of hue and chroma scores.

Non-Patent Literature 6 is aimed at indicating if insulin is of a proper temperature. If insulin is still too cool, it is often painful to use. In addition, the effectiveness of the medication could be delayed by the wrong viscosity. To support the user, a label with a sensor that turns blue has been made. It displays a snowflake when the medicine is stored below eight degrees Celsius and issues the message "OK" as soon as the medicine warms up above 18 degrees Celsius.

According to Non-Patent Literature 7, smart labels may also be used as indicators of, for example, tilt or impact, besides temperature.

For another example, there is further a technique relating to the smart labels: a so-called Open Monitor Technology of PolyTaksys GmbH, described in Non-Patent Literature 8 as a nano film processor based on the lateral oxidation of aluminum windows - depending on either time, temperature and humidity or combined.
Non-Patent Literature 1: https://en.wikipedia.org/wiki/Automatic_identification_and_data_capture (accessed in Dec. 2023)
Non-Patent Literature 2: "Development of a time-temperature indicator (TTI) label by rotary printing technologies", by S. Zabala, J. Castan, C. Martinez in Food Control, Volume 50, April 2015, Pages 57-64
Non-Patent Literature 3: https://www.leadingedgeonly.com/innovation/view/food-freshness-smart-indicator (accessed in Dec. 2023)
Non-Patent Literature 4: https://i3l.ac.id/smart-label-the-new-way-of-food-packaging/ (accessed in Dec. 2023)
Non-Patent Literature 5: Vonny Indah Sari et al 2023 IOP Conf. Ser.: Earth Environ. Sci. 1177 012049
Non-Patent Literature 6: https://www.faller-packaging.com/en/lp/temperature-indication-labels (accessed in Dec. 2023)
Non-Patent Literature 7: https://www.shockwatchuk.com/smart-labels-indicators/ (accessed in Dec. 2023)
Non-Patent Literature 8: https://www.globalinnovations.de/en/open-monitor/ (accessed in Dec. 2023)

### DESCRIPTION

In some cases, it is desirable to inform a user or an automated system in detail about an occurrence of at least one condition, while not using too much space for various labels. At the same time, there are many situations in which the use of an optically coded label, for example, a barcode, a QR code or another two-dimensional (2D) code is expected in any case. Hence, the inventor of the present disclosure has found a way for an optically coded label to change its coded message, including an at least one string, depending on an occurrence of a predetermined condition, by using error correction capabilities of the code in an initial and in a changed state.

In particular, the above and other aims are attained by the Example 1, as well as other examples:
An indicator label with a changeable code, wherein the changeable code is configured to be presented in an initial state by a first code and in a changed state indicating an occurrence of a certain condition by a second code, wherein the first code includes a first plurality of image features encoding at least a first string, the first plurality being redundant with an error correction capability for decoding the first string with respect to a possible incorrect determination of a subset of the first plurality of the image features, and wherein the second code is different from the first code and includes a second plurality of image features encoding at least a second string different from the first string, the second plurality being redundant with an error correction capability for decoding the second string with respect to a possible incorrect determination of a subset of the second plurality of the image features, wherein
   the first plurality of image features includes a first plurality of features of a first value region of an at least one optical characteristic and a first plurality of features of a second value region of the at least one optical characteristic, not intersecting with the first value region,
   the second plurality of image features includes a second plurality of features of the first value region of the at least one optical characteristic and a second plurality of features of the second value region of the at least one optical characteristic, and
   a subset of the first plurality of features of the first value region of the at least one optical characteristic is reactive and configured to change the values into the second value region in reaction to the occurrence of the certain condition, and thereby to turn into a respective subset of the second plurality of features of the second value region of the at least one optical characteristic, wherein the first code is thereby configured to turn into the second code upon the occurrence of the condition.
Example 2: The label of Example 1, wherein the at least one optical characteristic includes an at least one characteristic from a list including a color, a hue, a chroma, a reflectivity, a transmittance, a refractivity; and/or includes a composite optical characteristic being a combination of at least two from the list.
Example 3: The label of Example 1 or 2, wherein the first code is a matrix barcode, optionally a QR code, and the second code is a corresponding matrix QR code, optionally a QR code.
Example 4: The label of Example 3, wherein the first code is selected by encoding the first string and changing a result within its error correction capability.
Example 5: The label of Example 4, wherein the first code is within Level Q or H error correction capability from the result of encoding of the first string.
Example 6: The label of any Example from 3 to 5, wherein the second code is selected by encoding the second string and changing a result within its error correction capability.
Example 7: The label of Example 6, wherein the second code is within Level Q or H error correction capability from the result of encoding of the second string.
Example 8: The label of any preceding Examples, wherein the first string and the second string have a same prefix, wherein, optionally, the same prefix is a valid URL or a domain name.
Example 9: A label decoder, including an interface configured to receive an image of the label of any of Examples 1 to 8 and a processing unit configured to process this image and to decode the first string, upon finding the first code in the image, and the second string, upon finding the second code in the image, and thereby configured to decode the first string or the second string depending on a state of the changeable code captured in the image.
Example 9S: A software for a label decoder including an interface for receiving an image and including a processing unit, wherein the software includes instructions configured to cause the processing unit to process a received image of the label of any of Examples 1 to 8 to decode the first string, upon finding the first code in the image, and the second string, upon finding the second code in the image, and thereby to decode the first string or the second string depending on a state of the changeable code captured in the image.
Example 10: A mobile device, including a camera configured to capture an image of the label of any of Examples 1 to 8 and a processing unit configured to process the image, and to decode the first string, upon finding the first code in the image, and the second string, upon finding the second code in the image, and thereby configured to decode the first string or the second string depending on a state of the changeable code captured in the image.
Example 10S: A software for a mobile device including a camera and a processing unit, wherein the software includes instructions causing the mobile device to capture an image by the camera, and to cause the processing unit to process the image, of the label of any of Examples 1 to 8, to decode the first string, upon finding the first code in the image, and the second string, upon finding the second code in the image, and thereby to decode the first string or the second string depending on a state of the changeable code captured in the image.
Example 11: The mobile device of Example 10, wherein the processing unit is configured to invoke or generate a URL or a link for invocation of an application or a webpage corresponding to the decoded first or second string, wherein a first application or a first webpage corresponds to the first string, and a second application or a second webpage corresponds to the second string.
Example 11S: The software of Example 10S, wherein the software includes instructions causing the processing unit to invoke or generate a URL or a link for invocation of an application or a webpage corresponding to the decoded first or second string, wherein a first application or a first webpage corresponds to the first string, and a second application or a second webpage corresponds to the second string.
Example 12: A mobile device, including a camera configured to capture an image of the label of any of Examples 1 to 8 and a processing unit configured to initiate a transmission of the image to a label decoder for decoding the changeable code and to invoke an application or a webpage corresponding to the decoded first or second string upon receiving by the mobile device a respective URL or link from the decoder, wherein a first application or a first webpage corresponds to the first string, and a second application or a second webpage corresponds to the second string. Herein the label decoder may be as in the Example 9.
Example 12S: A software for a mobile device including a camera and a processing unit, wherein the software includes instructions causing the mobile device to capture an image by the camera, and to cause the processing unit to initiate a transmission of the image to a decoder for decoding the changeable code and to invoke an application or a webpage corresponding to the decoded first or second string upon receiving by the mobile device a respective URL or link from the decoder, wherein a first application or a first webpage corresponds to the first string, and a second application or a second webpage corresponds to the second string.
Example 13: A memory medium or device with a code data record for fabricating an indicator label with a changeable code for indication of an occurrence of a certain condition, wherein:
   the code data record is indicative of a spatial positioning of a first plurality of image features for a first code redundantly encoding at least a first string with an error correction capability with respect to a possible incorrect determination of a subset of the first plurality of the image features, for presenting an initial state of the changeable code, wherein the first plurality of image features is to include a first plurality of features of a first value region of an at least one optical characteristic and a first plurality of features of a second value region of the at least one optical characteristic, not intersecting with the first value region, and
   the code data record is indicative of which from the first plurality of features of the first value region of the at least one optical characteristic are to be configured reactive for changing the values into the second value region in reaction to the occurrence of the certain condition and thereby to turn the first code into a second code presenting a changed state of the changeable code, wherein the second code is to include a second plurality of image features redundantly encoding at least a second string with an error correction capability with respect to a possible incorrect determination of a subset of the second plurality of the image features, and the second plurality of image features is to include a second plurality of features of the first value region of the at least one optical characteristic and a second plurality of features of the second value region of the at least one optical characteristic.
Example 14: A method of a fabrication of an indicator label with a changeable code configured to be presented in an initial state by a first code encoding at least a first string, and in a changed state, indicating an occurrence of a certain condition, by a second code different from the first code and encoding at least a second string, the method including:
   creating on or in a substrate the first code including a first plurality of features encoding at least the first string, the first plurality being redundant with an error correction capability for decoding the first string with respect to a possible incorrect determination of a subset of the first plurality of the features, wherein the first plurality of features includes a first plurality of features within a first value region of an at least one optical characteristic and a first plurality of features within a second value region of the at least one optical characteristic, not intersecting with the first value region, wherein
   a subset of the first plurality of features of the first value region is being created reactive to react to the occurrence of the certain condition and to change the values of the at least one optical characteristic into the second value region upon the occurrence of the certain condition, wherein the first code is thereby configured to turn into the second code including a second plurality of optical features including a second plurality of features of the first value region of the at least one optical characteristic and a second plurality of features of the second value region of the at least one optical characteristic, the second plurality of optical features being redundant with an error correction capability for decoding the second string with respect to a possible incorrect determination of a subset of the second plurality of the features.
Example 15: The method of Example 14, including accessing said memory medium or memory device of Example 13 to obtain the code data record, wherein in said method said creating is based on said code data record.

### BRIEF DESCRIPTION OF THE DRAWINGS

For a more complete understanding of the present disclosure, and the advantages thereof, reference is now made to the following descriptions taken in conjunction with the accompanying drawings, in which:
**Figures 1A** **and** **1B** show examples of schematic diagrams of the changeable label in the initial state and in the changed state, according to the present disclosure.
**Figures 2A to 2D** provide an example relating to the generation of a changeable QR code for the changeable label, Figs. 2A and 2D show unperturbed codes for two different strings, while Figs. 2B and 2C show perturbed codes being respectively the initial and the changed states of the changeable code.
**Figures 2E to 2G** indicate the differences between successive pairs among Figures 2A to 2D; in particular, **Fig. 2F** indicates the reactive features in the code shown in **Fig. 2B****.**
**Fig. 3** shows an example of a schematic diagram of a label decoder according to the present disclosure.
**Fig. 4** shows an example of a schematic diagram of a mobile device according to the present disclosure.
**Fig. 5** shows another example of a schematic diagram of a mobile device according to the present disclosure.
**Fig. 6** schematically shows a memory medium or memory device with a code data record for fabricating the indicator label according to the present disclosure.

### DETAILED DESCRIPTION

Example embodiments are described below in more detail, but it is important to understand that embodiments can be provided in many alternate forms and should not be construed as limited to the examples set forth herein.

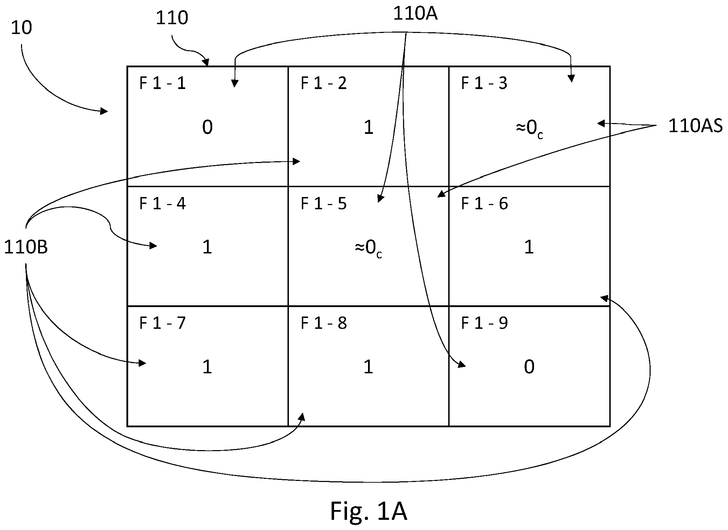

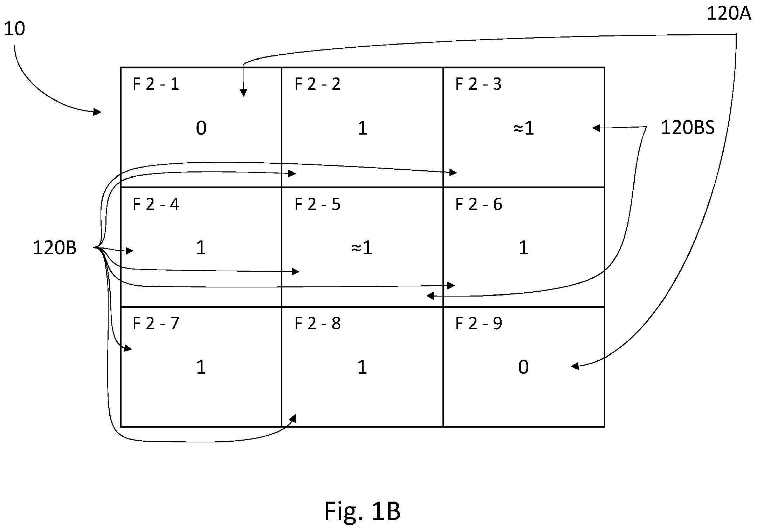

**Fig. 1A** shows an example of the schematic diagram of a changeable label (or changeable indicator label) 10 in the initial state, and **Fig. 1B** shows an example of the schematic diagram of the changeable label 10 in the changed state, according to the present disclosure. In these figures, the label 10 incudes a changeable code for checking whether a condition has occurred; this changeable code is presented in the initial state by a first code, and in the changed state by a second code. The first code includes a first plurality 110 of image features F1-1, F1-2, ..., F1-9, in this case pixels, encoding at least a first string S1. The first code may have other features, but they are not shown in Fig. 1A. The first plurality 110 is redundant with an error correction capability for decoding the first string S1 with respect to a possible incorrect determination (e.g. incorrect fabrication or detection) of a subset of the first plurality 110 of the image features F1-1, F1-2, ..., F1-9. The second code is different from the first code and includes a second plurality 120 of image features F2-1, F2-2, ..., F2-9 encoding at least a second string S2 different from the first string S1. The second code may have other features, but they are not shown in Fig. 1B. The second plurality 120 is redundant with an error correction capability for decoding the second string S2 with respect to a possible incorrect determination of a subset of the second plurality 120 of the image features F2-1, F2-2, ..., F2-9.

The first plurality 110 of image features F1-1, F1-2, ..., F1-9 includes a first plurality 110A of features of a first value region of an at least one optical characteristic. In Fig. 1Athis plurality 110A includes features F1-1, F1-3, F1-5 and F1-9; values in the first value region are translated into zeros in the digital code. Also, in Fig. 1Athe first plurality 110 includes a first plurality 110B of features of the second value region of at least one optical characteristic: F1-2, F1-4, F1-6, F1-7, and F1-8. Values in the second value region may correspond to ones in the code. In the present example, the features F1-1 and F1-9 have approximately the same, between them, value of the at least one optical characteristic, to which zero value is assigned in the code, and features F1-3 and F1-5 have another approximately the same, between them, value of the at least one optical characteristic, because they are configured for the change for indicating the occurrence of the condition and are prepared in at least one step differently from the features F1-1 and F1-9, as discussed below. Still, this another value relevant of the at least one optical characteristic to the features F1-3 and F1-5 corresponds to the zero value in the code (for example, within the error correction capability). At the same time, the case may be that the features F1-3 and F1-5 would be implemented differently even between them, and would have different, between them, values of the at least one optical characteristic: for example, different features may be made to react to different chemicals or physical parameters associated with the occurrence of the condition. In principle, each of the reactive features, such as F1-3 and F1-5, may change the state based on a technical condition, for example, a physical, mechanical, chemical, electrochemical, enzymatic or microbial condition, which is therefore expressed as the change in the at least one optical characteristic value. The change in the expression may be caused by occurrence of the momentary condition, for example, if a temperature exceeds a pre-set threshold, or by occurrence of the accumulated condition based on a continuous response of one or more reactive features depending on the temperature along a time period (for example, as in the Non-Patent Literature 2). The at least one optical characteristic may be or may include an at least one characteristic from a list including a color, a hue, a chroma, a reflectivity, a transmittance, a refractivity; and/or or may be or include a composite optical characteristic being a combination of at least two from this list. For example, the color characteristic may be considered in some cases as a one-dimensional characteristic, and in some other cases as a two-dimensional characteristic, for example, using hue and chroma scores, as in Non-Patent Literature 5, i.e. two characteristics. In any case, there would be a region, for example, an interval in the one-dimensional case, in which an image feature would correspond to 0 in the code based on its value of the optical characteristic, and a region in which the image feature would correspond to 1 in the code based on its value of the optical characteristic; just each of the regions would become two-dimensional in the two-dimensional case, etc. The first and second value regions may share a pre-defined border or a separation line, or there may be a pre-defined region where it is not possible to assign 0 or 1 in the code to the image feature based on its value of the at least one optical characteristic.

Then, in Fig. 1B, the second plurality 120 of image features F2-1, F2-2, ..., F2-9 includes a second plurality of features 120A of the first value range of the at least one optical characteristic: features F2-1 and F2-9 in Fig. 1B; these features correspond to zeros in the code and thus are respectively the same and maintain the state of F1-1 and F1-9. Also, the second plurality 120 includes a second plurality 120B of features of the second value range of the at least one optical characteristic: features F2-2, F2-3, F2-4, F2-5, F2-6, F2-7, and F2-8. These features, based on these values, correspond to ones in the code. The value of the at least one optical characteristic may be approximately the same for the features F2-2, F2-4, F2-6, F2-7 and F2-8, while the values of the at least one optical characteristic for the features F2-3 and F2-5 may be approximately the same between them, but different from the value of F2-2, etc, since the features F2-3 and F2-5 are implemented differently and may acquire the value in the second value region only in result of the occurrence of the technical condition, after the change from their values in the first value region.

That is, the plurality 110A of the features includes a subset 110AS of the reactive features F1-3 and F1-5 in Fig. 1A configured to change their values of the at least one optical characteristics from those in the first value range upon the occurrence of the condition to those in the second value range: this subset 110A. Thereby, the subset 110AS is configured to turn into a respective subset 120BS of the second plurality 120B of features F2-3 and F2-5 in Fig. 1B with values of the at least one optical characteristic in the second value range. Overall, the first code and the second code are such that the changes of values of the at least one optical characteristic for the features of the subset 110AS turn the first code into the second code upon occurrence of the technical condition.

For example, implemented according to the present disclosure, the label therefore may be configured as a temperature, or a time-temperature indicator (TTI), or a pH indicator, based on color as the at least one technical characteristic. The choice of colors for the first value region and the second value region may be made as, for example, as in any of Non-Patent Literature 1 to Non-Patent Literature 8. Although, clearly, many more other various choices are possible.

As for the colors, in many cases they are approximated by various shades of grey (for example, the function "print in grayscale" is ubiquitous). In the example of Figs. 1A and 1B, the colors may be chosen to correspond to white, based on approximation or a standard barcode reflectance measurement, for F1-1 and F1-9, very light grey for F1-3 and F1-5, and black for F1-2, F1-4, F1-6, F1-7, and F1-8; and again white F2-1 and F2-9, very dark grey for F2-3 and F2-5, and again black F2-2, F2-4, F2-6, F2-7, and F2-8. However, these choices may as well be inverted, depending on the fabrication method of the features: in this case F1-1 and F1-9 may be black (but still correspond to zeros in the code), F1-3 and F1-5 may be rather dark grey, and F1-2, F1-4, F1-6, F1-7, and F1-8 may be white; and F2-1 and F2-9 as well would be black, F2-3 and F2-5 would be light grey, and F2-2, F2-4, F2-6, F2-7, and F2-8 would be white.

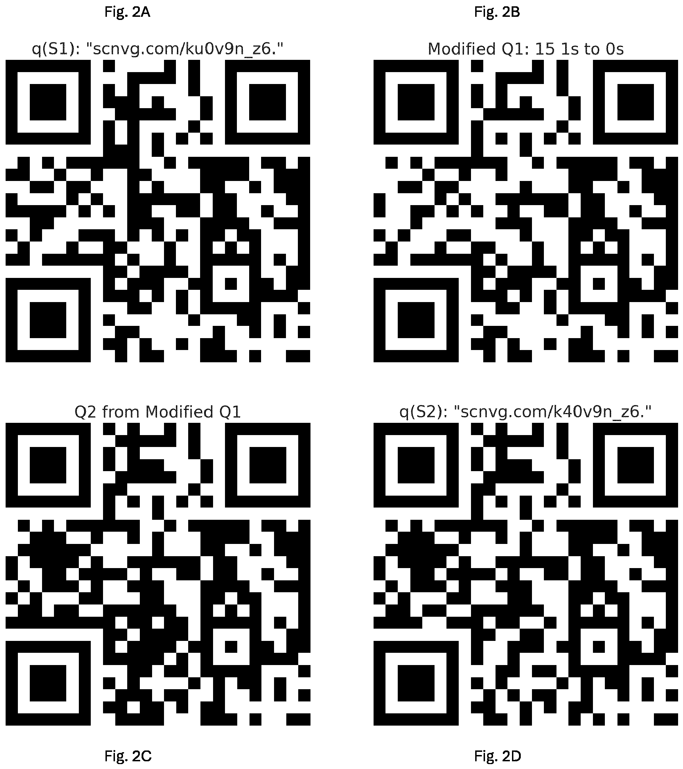

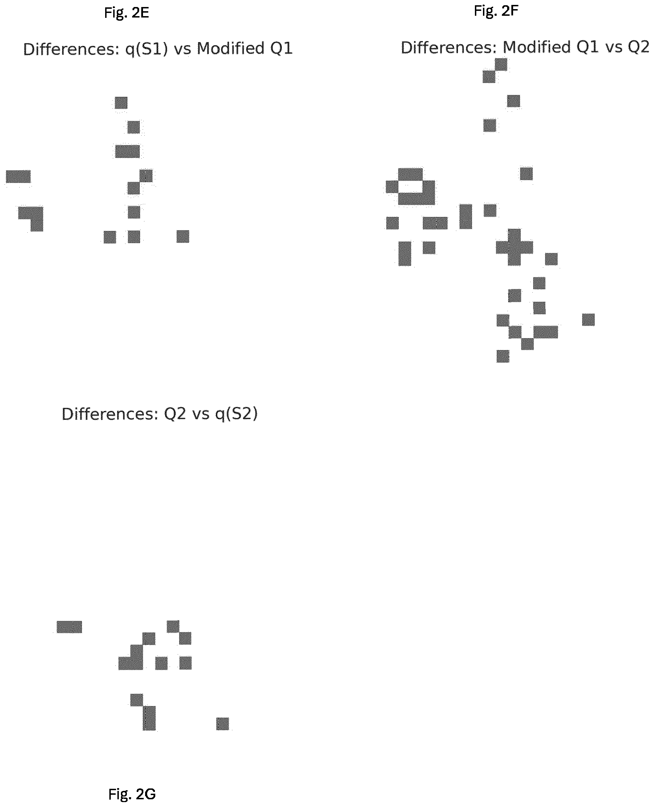

**Figs. 2A-2D** show an example of a generation of a changeable QR code (Type 2 or Model 2, 25x25 size, Level Q, as explained below). Strings S1="scnvg.com/ku0v9n_z6" and S2='scnvg.com/k40v9n_z6" have been encoded with standard (canonical, unperturbed) QR codes shown as q(S1) and q(S2) in Figs. 2A and 2D, respectively, using the corresponding Python language library called "qrcode". Then, based on the error correction capability, 15 pixels have been modified from black to white (from 1 to 0, but in general the choice of colors as black and white is not limiting and they just represent the first and second regions of the at least one optical characteristic) within this error correction capability to remove ones which are not present in Fig. 2D and to obtain Fig. 2B. Such a code as in Fig. 2B may present the first, initial, code of the label. It has the error correction capability in the sense that if it is captured and decoded without any errors, it would yield S1 after decoding, and it would yield S1 also if errors bringing this code closer to the q(S1) of Fig. 2A occur. Further, there is some error correction capability left even for some errors which would move the code of Fig. 2B further away from the unperturbed code of Fig. 2A.

Then, in Fig. 2B a subset of white (zero) pixels is selected to turn this code into the code shown in Fig. 2C, which corresponds to the changed state of the changeable code. The code in Fig. 2C is within the error correction capability of the unperturbed code in Fig. 2D. Those pixels, which change color between Fig. 2A and Fig. 2B, do not change color between Figs. 2B and 2C; otherwise, it would be inefficient (although not as a rule impossible). With such a generation procedure, the code in Fig. 2C has some black pixels not found in Fig. 2D, but by 15 less than such pixels than the code in Fig. 2A has. As for the zero pixels, in the present example, for efficiency of the use of the error correction capability, Fig. 2C does not have any pixels which are not found in Fig. 2D: such pixels were present in Fig. 2B, but were included into the subset of the pixels which change the state, i.e. flip into ones, upon the occurrence of the condition changing the state of the changeable code from the first code in Fig. 2B to the second code in Fig. 2C.

As mentioned above, **Fig. 2E to 2G** indicate the differences between successive pairs among the codes of Figures 2A to 2D. In particular, **Fig.** 2F thus indicates the reactive features in the initial code shown in **Fig. 2B****.**

Such a generation method for the changeable code allows avoiding first codes which, when the state is changed to the second code, do not correspond to any string (i.e. cannot be decoded), and at the same time allows switching the code from the first string to the second string, i.e. going beyond the error correction capability of the unperturbed code encoding the first string, and far enough in the proper direction so as to leap over the undecodable configurations, and reach the second code being within the error correction capability of the unperturbed code encoding the second string.

With regard to the number of flipped pixels being 15 in the first preparatory step in the above example, it has to be noted that generally there is no full freedom of which and exactly how many pixels may be used in such a step. The error correction capability (error tolerance) is more directly determined based on the remaining integrity of the codewords, rather than based on the number of corrupted pixels. For type 2 QR codes (including 25x25 modules), each level has a distinct number of available codewords and, consequently, error tolerance capability. The following definitions are standard:

| | |
|---|---|
| Level L (Low) | up to 7% of codewords can be damaged; |
| Level M (Medium) | up to 15% of codewords can be damaged; |
| Level Q (Quartile) | up to 25% of codewords can be damaged; |
| Level H (High) | up to 30% of codewords can be damaged; |

without the loss of the readability of the whole message. In worst-case scenarios, corruption distributed across different codewords can render a QR code unreadable with fewer corrupted bits - for example, at level Q, even some 13 corrupted data bits may lead to the unreadability if each corrupts a separate codeword. Thus, a more efficient way for searching the perturbed (modified) codes as similar to the visualized in Figs. 2B and 2C may include first assessing a range of a number of pixels which may be different between each of them and its respective unperturbed code (similar to the codes in Figs. 2A and 2D) without corrupting the string S1 or S2. Also, pixels changing the state (value of the at least one optical characteristic, color in the present example) between Figs. 2B and 2C may be among the most corruptive pixels. As for the choice of the level of the code, it the message, like a string S1 or S2 is longer, then there is less bits left for the error correction capability. That is, in general, there are ways to accelerate the search for the suitable perturbed QR codes, which would serve as the first and second codes of the changeable code, or sooner to arrive at the conclusion that for a certain combination of strings S1 and S2 unperturbed codes are so remote that it would not be possible to find appropriate perturbed codes; however, in any case, the inventor's idea to use the error correction capabilities of the unperturbed codes to search for the perturbed codes, which would encode different strings S1 and S2 and in which one code could transform by the reaction of reactive pixels (or features) into the other code, apparently allows generating the codes in a great range of various specific cases or embodiments.

In this regard, the convenience of working with QR codes is in part due to the fact that the balance of "black" and "white" is one of the factors that the QR code generators use. Hence, for QR codes, it is quite likely that the unperturbed codes for two strings S1 and S2 would not be very remote.

For example, each of the encoded strings may even correspond to a Uniform Resource Locator (URL) or just a domain name, in the internet or another network. The length of each of the strings S1 and S2 may be, for example, at least 4, or 8 symbols, each from the range of symbols acceptable in URLs. Strings S1 and S2 may even share the prefix, even of 11 symbols, as in the example above. With less degrees of freedom for the choice of the strings, there are less pairs of the unperturbed codes, and hence a smaller chance that the unperturbed codes would be such that a pair of the appropriate perturbed codes would exist; however, as the example of Figs. 2A-2D shows, the inventor's idea has led to the appropriate pair of the unperturbed codes (since it has led to the appropriate pair of the perturbed codes in Figs. 2B and 2C).

In view of the example of Figs. 2A-2G, and the above relevant considerations, it is thus clear that the features may be pixels. The first code may be a QR code, and the second code may be a corresponding QR code (e.g. in size). Then, the first code may be selected by encoding the first string and changing a result within its error correction capability. The first code may be within, for example, Level Q or H error correction capability from the result of encoding of the first string. The second code may be selected by encoding the second string and changing a result within its error correction capability. The second code may be within Level Q or H error correction capability from the result of encoding of the second string. The first string and the second string may have a same prefix. Herein, optionally, the same prefix is a valid URL or a domain name.

Similar to QR codes, there are several other two-dimensional (2D) barcode standards designed to store information. These standards include:
Data Matrix: Similar to QR codes, Data Matrix codes are conventionally made of black and white cells (but the error correction capability allows for deviations) in a square or rectangular pattern. They are widely used in various industries, especially for marking small items.
PDF417: A stacked linear barcode symbol format used in a variety of applications, primarily transport, identification cards, and inventory management.
Aztec Code: A 2D matrix barcode used by the transportation industry, particularly for tickets and airline boarding passes. It's known for its distinctive square bulls-eye pattern at the center.
MaxiCode: Developed by UPS, it's used for managing and tracking shipments. It appears as a hexagonal grid with a bulls-eye center.
Micro QR Code: A smaller version of the QR code, designed for applications where space is at a premium.
High Capacity Color Barcode (HCCB): Developed by Microsoft, these use colored triangles to store data and are used in applications that require storing large amounts of data in small spaces.

The generic notion for these technologies is "2D barcodes" or "matrix barcodes". Unlike traditional barcodes, which are one-dimensional and represent data by varying the widths and spacings of parallel lines, 2D barcodes are graphical images that store information in two dimensions. They can hold a significantly larger amount of data and are designed to be scanned and read by specific devices, including smartphones and dedicated barcode readers. Hence, the inventor's idea of avoiding using too much space for various labels by using the changeable code as described above may be applied to them too.

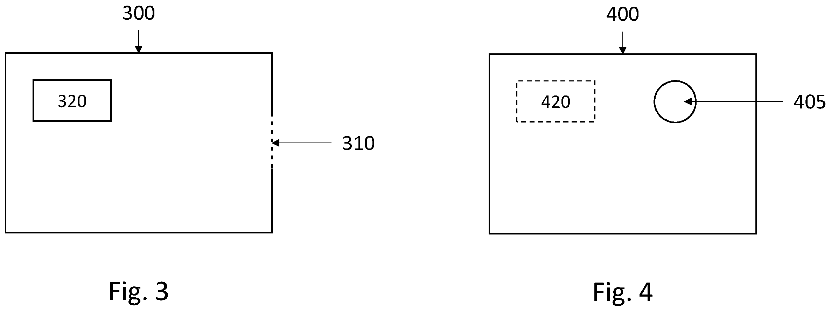

**Fig. 3** shows a schematic diagram of a label decoder 300, including an interface 310 for receiving an image of the label as in any examples described in the present disclosure, and a processing unit 320 for processing this image and decoding the first string, upon finding the first code in the image, and the second string, upon finding the second code in the image: that is, the decoder 300 in the same configuration is configured to decode the first string or the second string depending on a state of the changeable code captured in the image, without the need to retake the image with, for example, a different camera or scanner or scanning unit (possibly, with its own lighting system) adapted for a code of a different type if the received code is the second code rather than the first code, or vice versa. The interface 310 may be, for example, a wireless or a wired network interface; or it may be a camera or a scanner connection interface. Other elements, such as RAM and non-volatile memory and an output interface (if different from the input interface) are not shown, but may be present in the label decoder 300 too. The processing unit 320 may include one or more processor, including, for example, a central processing unit. The label decoder 300 may be presented, for example, by a remote server or by a barcode scanner (of which the scanning unit is a part).

That is, in some examples, according to the present disclosure, a software installed on the label decoder 310, or configured for installation on the label decoder, may include instructions to the processing unit 310 to process an image, received by the label decoder and comprising the label of any of Examples 1 to 8, to decode the first string, upon finding the first code in the image, and the second string, upon finding the second code in the image, and thereby to decode the first string or the second string depending on a state of the changeable code captured in the image.

The software may be stored in a computer-readable memory, for example, non-volatile: for example, a hard drive of a developer's computer or of a digital distribution platform, an app store or marketplace, or an on-chip storage, for instance, an SD or microSD-card. Additionally, or alternatively, the computer-readable memory may be readable by the mobile device 300, or the memory storing the software may be a part of the mobile device 300, independently if this memory is readable by a general-purpose computer or not.

**Fig. 4** shows a schematic diagram of a mobile device 400, for example, a smartphone or a tablet, including a camera 405 for capturing an image of the label in any of its configurations described in the present disclosure and a processing unit 420 for processing the image captured by the camera 405 and for decoding the first string, upon finding the first code in the image, and the second string, upon finding the second code in the image, and thereby for decoding the first string or the second string depending on a state of the changeable code captured in the image. The camera 405, useful for the techniques disclosed in the present disclosure, may include one or more camera units or sensors, and the image may be captured with one of them or it may be a composite image based on images captured by different camera units or sensors.

Also, the processing unit 420 may be configured to invoke or generate a URL or a link for invocation of an application or a webpage corresponding to the decoded first or second string. Herein, a first application (or a first webpage) may correspond to the first string, and a second application (or a second webpage) may correspond to the second string. For example, in case of a raw food item delivered without an indication of the disruption of the time-time-temperature condition by the label, a webpage with recommended recipes for this raw food item would be opened; and in case of the spoilt food time, an application of the delivery company with a warning regarding the handling of the spoilt items and for claiming the loss would be opened.

That is, in some examples, according to the present disclosure, a software installed on the mobile device 400, or configured for installation on the mobile device, for instance, the smartphone or the tablet, may include instructions to the processing unit 420 to allow a user to instruct the mobile device 400, via at least one of its interfaces, to capture an image by its camera 405. The image may be of the label in any of its configurations or states described in the present disclosure. Alternatively, the mobile device 400 may be configured to receive the image, for example, from the internet.

Independently of the presence or absence of the instructions to capture the image in the software, the software installed on the mobile device 400, or configured for installation on the mobile device, may include instructions for the processing unit 420 to cause it to process the image (captured by the camera 405 or received from another device, for example, via a network or some standard connection, such as USB) and to decode the first string, upon finding the first code in the image, and the second string, upon finding the second code in the image, and thereby to decode the first string or the second string depending on a state of the changeable code captured in the image. For example, the instructions may allow a user, via one or more of the interfaces of the mobile device, to cause such image processing.

Optionally, the software may include instructions to the processing unit 420 for causing it to invoke or generate a URL or a link for invocation of an application or a webpage corresponding to the decoded first or second string (as in examples provided above for the mobile device 400). In any case, the software may be presented by a component, an application (an app), or a set or a combination of two or more components or applications (e.g. two components, or a component and an application, or two applications, one of which, for example, in the set, may be a camera application, such as provided with the tablet or smartphone operating system). The software may be stored in a computer-readable memory, for example, non-volatile: for example, a hard drive of a developer's computer or of a digital distribution platform, an app store or marketplace, or an on-chip storage, for instance, an SD or microSD-card. Additionally, or alternatively, the computer-readable memory may be readable by the mobile device 400, or the memory storing the software may be a part of the mobile device 400, independently if this memory is readable by a general-purpose computer or not.

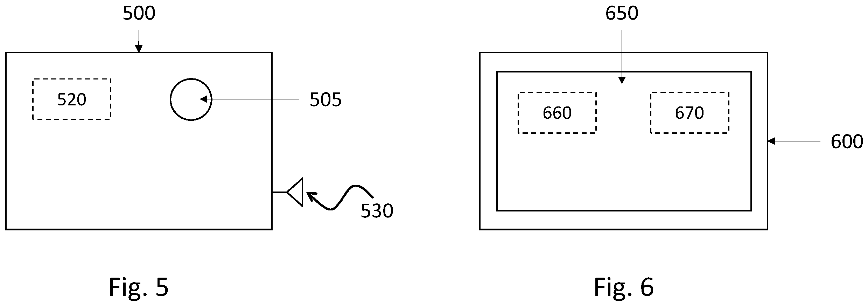

**Fig. 5** relates to an alternative scheme, in which a schematically shown mobile device 500, for example, a smartphone or a tablet, includes a camera 505 for capturing an image of the label as in any of the examples in the present disclosure, and a processing unit 520 for initiating a transmission of the image to a decoder for decoding the changeable code via an interface 530 (which may be a wireless network interface of any kind). Also, the processing unit 520 may be used for invoking an application or a webpage corresponding to the decoded first or second string upon receiving (e.g. via the interface 530) by the mobile device a respective URL or link from the decoder. Herein, a first application or a first webpage corresponds to the first string, and a second application or a second webpage corresponds to the second string, and these applications and webpages are different between them.

Accordingly, a software installed on the mobile device 500, or configured for installation on the mobile device, for instance, the smartphone or the tablet, and stored in the memory readable by a computer or the mobile device (as its external or internal memory), may include instructions to the processing unit 520 to initiate the transmission of the image to the decoder. Also, this software may include instructions for the processing unit 520 to invoke an application or a webpage corresponding to the decoded first or second string upon receiving by the mobile device a respective URL or link from the decoder.

This software may be stored similarly to as described for the software for the mobile device 400: in a computer-readable memory, for example, non-volatile: for example, a hard drive of a developer's computer or of a digital distribution platform, etc. Additionally, or alternatively, this computer-readable memory may be readable by the mobile device 500, or the memory storing the software for the mobile device 500 may be a part of the mobile device 500, independently if this memory is readable by a general-purpose computer or not.

Referring to **Fig. 6****,** there is schematically shown a memory medium or device 600 with a code data record 650 for fabricating the indicator label with the changeable code for indication of an occurrence of a certain condition, as discussed in the present disclosure. The code data record 650 is indicative of a spatial positioning (i.e. include spatial position data 660) of a first plurality of image features; this first plurality is to represent a first code redundantly encoding at least a first string with an error correction capability with respect to a possible incorrect determination of a subset of the first plurality. Thus, this first plurality would be useful for presenting an initial state of the changeable code. The first plurality of image features is to include a first plurality of features of a first value region of an at least one optical characteristic and a first plurality of features of a second value region of the at least one optical characteristic, not intersecting with the first value region.

Also, the code data record 650 is indicative of which from the first plurality of features of the first value region of the at least one optical characteristic are to be configured reactive (for example, the code data record 650 may include a list 670 of such features). These features are to be used for changing the values of the at least one optical characteristic into the second value region in reaction to the occurrence of the certain condition and thereby to turn the first code into a second code presenting a changed state of the changeable code. The code data record 650 is such that the second code is to include a second plurality of image features redundantly encoding at least a second string with an error correction capability with respect to a possible incorrect determination of a subset of the second plurality of the image features. Also, it is taken into account in the spatial position data 660 and the list 670 that the second plurality of image features is to include a second plurality of features of the first value region of the at least one optical characteristic and a second plurality of features of the second value region of the at least one optical characteristic.

The memory medium 600 may be medium of a RAM, or of any non-volatile computer readable memory, internal or external, for example, flash or a hard drive, or it may be a memory device, e.g. a solid-state memory device.

Also, according to the present disclosure, a method of a fabrication of an indicator label with a changeable code configured to be presented in an initial state by a first code encoding at least a first string, and in a changed state, indicating an occurrence of a certain condition, by a second code different from the first code and encoding at least a second string has been contemplated by the inventor.

This method includes creating on or in a substrate the first code including a first plurality of features encoding at least the first string, the first plurality being redundant with an error correction capability for decoding the first string with respect to a possible incorrect determination of a subset of the first plurality of the features, wherein the first plurality of features includes a first plurality of features within a first value region of an at least one optical characteristic and a first plurality of features within a second value region of the at least one optical characteristic, not intersecting with the first value region. However, a subset of the first plurality of features of the first value region is being created reactive to react to the occurrence of the certain condition and to change the values of the at least one optical characteristic into the second value region upon the occurrence of the certain condition, wherein the first code is thereby configured to turn into the second code including a second plurality of optical features including a second plurality of features of the first value region of the at least one optical characteristic and a second plurality of features of the second value region of the at least one optical characteristic, the second plurality of optical features being redundant with an error correction capability for decoding the second string with respect to a possible incorrect determination of a subset of the second plurality of the features. The creation step may use, for example, printing or deposition or various other known methods (including described in the Non-Patent Literature 2 to 8, for example growing a certain culture). However, the subset of the first plurality of features of the first value region is being created reactive; and for this reason it does not need to be printed, or deposited and so on with the rest of the features of the first value region. Rather, it may be applied in one of the ways discussed in the Non-Patent Literature 2 to 8 or known in the art.

In view of the above, the method of fabrication may also include accessing the memory medium or memory device according to the examples present in the disclosure to obtain the code data record 650, and using the code data record 650 (for example, the spatial positioning data 660 and the list 670) for creation (e.g. positioning) of the features, including the reactive features.

Although the present disclosure and its advantages have been described in detail, it should be understood that various changes, substitutions and alterations can be made herein without departing from the scope of the disclosure or the appended claims.

## Claims

1. An indicator label with a changeable code, wherein the changeable code is configured to be presented in an initial state by a first code and in a changed state indicating an occurrence of a certain condition by a second code, wherein the first code comprises a first plurality of image features encoding at least a first string, the first plurality being redundant with an error correction capability for decoding the first string with respect to a possible incorrect determination of a subset of the first plurality of the image features, and wherein the second code is different from the first code and comprises a second plurality of image features encoding at least a second string different from the first string, the second plurality being redundant with an error correction capability for decoding the second string with respect to a possible incorrect determination of a subset of the second plurality of the image features, wherein
the first plurality of image features comprises a first plurality of features of a first value region of an at least one optical characteristic and a first plurality of features of a second value region of the at least one optical characteristic, not intersecting with the first value region,
the second plurality of image features comprises a second plurality of features of the first value region of the at least one optical characteristic and a second plurality of features of the second value region of the at least one optical characteristic, and
a subset of the first plurality of features of the first value region of the at least one optical characteristic is reactive and configured to change the values into the second value region in reaction to the occurrence of the certain condition, and thereby to turn into a respective subset of the second plurality of features of the second value region of the at least one optical characteristic, wherein the first code is thereby configured to turn into the second code upon the occurrence of the condition.

2. The label of claim 1, wherein the at least one optical characteristic comprises an at least one characteristic from a list including a color, a hue, a chroma, a reflectivity, a transmittance, a refractivity; and/or comprises a composite optical characteristic being a combination of at least two from the list.

3. The label of claim 1 or 2, wherein the first code is a matrix barcode, optionally a QR code, and the second code is a corresponding matrix QR code, optionally a QR code.

4. The label of claim 3, wherein the first code is selected by encoding the first string and changing a result within its error correction capability and, optionally, wherein the first code is within Level Q or H error correction capability from the result of encoding of the first string.

5. The label of claim 3 or 4, wherein the second code is selected by encoding the second string and changing a result within its error correction capability, wherein, optionally, the second code is within Level Q or H error correction capability from the result of encoding of the second string.

6. The label of any preceding claims, wherein the first string and the second string have a same prefix, wherein, optionally, the same prefix is a valid URL or a domain name.

7. A label decoder, comprising an interface configured to receive an image of the label of any of claims 1 to 6 and a processing unit configured to process this image and to decode the first string, upon finding the first code in the image, and the second string, upon finding the second code in the image, and thereby configured to decode the first string or the second string depending on a state of the changeable code captured in the image.

8. A software for a label decoder comprising an interface for receiving an image and a processing unit, wherein the software comprises instructions configured to cause the processing unit to process a received image of the label of any of claims 1 to 6 to decode the first string, upon finding the first code in the image, and the second string, upon finding the second code in the image, and thereby to decode the first string or the second string depending on a state of the changeable code captured in the image.

9. A mobile device, comprising a camera configured to capture an image of the label of any of claims 1 to 6 and a processing unit configured to process the image, and to decode the first string, upon finding the first code in the image, and the second string, upon finding the second code in the image, and thereby configured to decode the first string or the second string depending on a state of the changeable code captured in the image, wherein, optionally, the processing unit is configured to invoke or generate a URL or a link for invocation of an application or a webpage corresponding to the decoded first or second string, wherein a first application or a first webpage corresponds to the first string, and a second application or a second webpage corresponds to the second string.

10. A software for a mobile device comprising a camera and a processing unit, wherein the software comprises instructions configured to cause the mobile device to capture an image by the camera and to cause the processing unit to process the image, of the label of any of claims 1 to 6, to decode the first string, upon finding the first code in the image, and the second string, upon finding the second code in the image, and thereby to decode the first string or the second string depending on a state of the changeable code captured in the image.

11. A mobile device, comprising a camera configured to capture an image of the label of any of claims 1 to 6 and a processing unit configured to initiate a transmission of the image to a decoder for decoding the changeable code and to invoke an application or a webpage corresponding to the decoded first or second string upon receiving by the mobile device a respective URL or link from the decoder, wherein a first application or a first webpage corresponds to the first string, and a second application or a second webpage corresponds to the second string.

12. A software for a mobile device comprising a camera and a processing unit, wherein the software comprises instructions causing the mobile device to capture an image by the camera, and to cause the processing unit to initiate a transmission of the image to a decoder for decoding the changeable code and to invoke an application or a webpage corresponding to the decoded first or second string upon receiving by the mobile device a respective URL or link from the decoder, wherein a first application or a first webpage corresponds to the first string, and a second application or a second webpage corresponds to the second string.

13. A memory medium or device with a code data record for fabricating an indicator label with a changeable code for indication of an occurrence of a certain condition, wherein:
the code data record is indicative of a spatial positioning of a first plurality of image features for a first code redundantly encoding at least a first string with an error correction capability with respect to a possible incorrect determination of a subset of the first plurality of the image features, for presenting an initial state of the changeable code, wherein the first plurality of image features is to comprise a first plurality of features of a first value region of an at least one optical characteristic and a first plurality of features of a second value region of the at least one optical characteristic, not intersecting with the first value region, and
the code data record is indicative of which from the first plurality of features of the first value region of the at least one optical characteristic are to be configured reactive for changing the values into the second value region in reaction to the occurrence of the certain condition and thereby to turn the first code into a second code presenting a changed state of the changeable code, wherein the second code is to comprise a second plurality of image features redundantly encoding at least a second string with an error correction capability with respect to a possible incorrect determination of a subset of the second plurality of the image features, and the second plurality of image features is to comprise a second plurality of features of the first value region of the at least one optical characteristic and a second plurality of features of the second value region of the at least one optical characteristic.

14. A method of a fabrication of an indicator label with a changeable code configured to be presented in an initial state by a first code encoding at least a first string, and in a changed state, indicating an occurrence of a certain condition, by a second code different from the first code and encoding at least a second string, the method comprising:
creating on or in a substrate the first code comprising a first plurality of features encoding at least the first string, the first plurality being redundant with an error correction capability for decoding the first string with respect to a possible incorrect determination of a subset of the first plurality of the features, wherein the first plurality of features comprises a first plurality of features within a first value region of an at least one optical characteristic and a first plurality of features within a second value region of the at least one optical characteristic, not intersecting with the first value region, wherein
a subset of the first plurality of features of the first value region is being created reactive to react to the occurrence of the certain condition and to change the values of the at least one optical characteristic into the second value region upon the occurrence of the certain condition, wherein the first code is thereby configured to turn into the second code comprising a second plurality of optical features comprising a second plurality of features of the first value region of the at least one optical characteristic and a second plurality of features of the second value region of the at least one optical characteristic, the second plurality of optical features being redundant with an error correction capability for decoding the second string with respect to a possible incorrect determination of a subset of the second plurality of the features.

15. The method of claim 14, comprising accessing said memory medium or device of claim 13 to obtain the code data record, wherein in said method said creating is based on said code data record.
